Europäisches Patentamt

European Patent Office

Office européen des brevets

(19)

(11) Numéro de publication: **0 156 723**
**B1**

(12) **FASCICULE DE BREVET EUROPEEN**

(45) Date de publication du fascicule du brevet: **19.09.90**

(21) Numéro de dépôt: **85400488.4**

(22) Date de dépôt: **14.03.85**

(51) Int. Cl.⁵: **G 11 B 15/29,** G 11 B 23/087, **G 11 B 15/26**

(54) Dispositif d'entrainement de bande magnetique par pincement et application.

(30) Priorité: **19.03.84 FR 8404197**

(43) Date de publication de la demande:
**02.10.85 Bulletin 85/40**

(45) Mention de la délivrance du brevet:
**19.09.90 Bulletin 90/38**

(84) Etats contractants désignés:
**AT BE CH DE FR GB IT LI NL SE**

(56) Documents cités:
**EP-A-0 011 467**
**EP-A-0 089 865**
**DE-B-1 128 676**
**DE-C- 723 995**
**DE-C- 872 660**
**FR-A-1 067 319**
**US-A-3 604 606**
**US-A-3 692 255**
**US-A-3 877 627**
**US-A-3 907 230**

(73) Titulaire: **SCHLUMBERGER INDUSTRIES**
**50, avenue Jean Jaurès**
**F-92120 Montrouge (FR)**

(72) Inventeur: **Merle, Jean-Pierre**
**7, rue Cécile Dinant**
**F-92140 Clamart (FR)**

(74) Mandataire: **Ritzenthaler, Jacques**
**SCHLUMBERGER INDUSTRIES CENTRE DE**
**RECHERCHE/SMR B.P. 620-05**
**F-92542 Montrouge Cedex (FR)**

Courier Press, Leamington Spa, England.

## Description

La présente invention concerne un dispositif d'entraînement d'une bande magnétique pincée entre deux galets dont la rotation simultanée provoque l'entraînement de cette bande, ce dispositif comprenant un galet moteur monté à rotation autour d'un premier axe et fournissant l'énergie nécessaire à l'entraînement de la bande, et un galet presseur, monté à rotation autour d'un second axe sensiblement parallèle au premier et assurant le pincement de la bande.

Ces dispositifs d'entraînement de bande par pincement sont bien connus dans le domaine de l'enregistrement magnétique. Un exemple en est donné dans le brevet US 3.907.230 désignant le même inventeur.

En dehors de ce type d'entraînement par pincement, il existe également des systèmes d'entraînement à l'aide d'un axe d'enroulement, notamment celui décrit dans le brevet DE-C-723,995 qui fait appel à un ensemble de trois galets dont les axes respectifs de rotation sont parallèles. Selon ce système, un galet presseur est disposé entre un galet moteur et un galet de friction solidaire de l'axe d'enroulement. Le galet presseur est sollicité élastiquement contre les deux autres galets selon un axe perpendiculaire aux axes de rotation des galets, et il est monté à rotation autour de la direction suivant laquelle le galet est sollicité. Cependant, comme évoqué ci-dessus, un tel système ne concerne pas un entraînement par pincement de la bande.

Les dispositifs connus, dans lesquels la bande est pincée directement entre le galet moteur et le galet presseur, présentent un défaut qui, bien que dépourvu de conséquences graves dans les cas courants, peut se révéler très gênant dans des applications spécifiques.

Plus précisément, lorsque le défilement de la bande implique de fréquents mouvements de va-et-vient ou de marche-arrêt, on constate que la bande dérive en hauteur sur le galet presseur, c'est-à-dire monte ou descend suivant la direction de l'axe de ce galet.

A température ambiante, cette dérive en hauteur peut être relativement faible, par exemple de l'ordre du dizième de millimètre.

Néanmoins, cette dérive augmente lorsque la température diminue, au point d'atteindre typiquement six dizièmes de millimètre à -40°C.

Lorsque les dérives atteignent ces valeurs, qui ne sont plus du tout négligeables par rapport à la largeur des pistes d'enregistrement correspondant aux informations enregistrées sur la bande, il en résulte, à la lecture de ces informations, un affaiblissement des signaux de lecture qui est au moins gênant, et parfois même inacceptable.

Dans ce contexte, le but de la présente invention est de proposer un dispositif d'entraînement de bande magnétique n'introduisant qu'une dérive négligeable de la bande, même lorsque celle-ci est utilisée en va-et-vient et à des températures relativement basses, de l'ordre de -40°C.

A cet effet, le dispositif de l'invention comprend les éléments décrits dans la revendication 1.

De préférence, le quatrième axe, autour duquel le galet presseur est monté à rotation, est sensiblement perpendiculaire au plan passant par les premier et troisième axes.

Pour obtenir un meilleur effet, on peut prévoir que la bande entoure le galet de renvoi sur un angle d'enroulement au moins égal à 90°.

Afin que le galet presseur s'appuie correctement sur les galets moteur et de renvoi, ce galet presseur possède de préférence une possibilité de débattement relativement grande suivant une direction parallèle au plan joignant les premier et troisième axes.

En outre, ce résultat est d'autant plus facilement atteint si l'angle dont le sommet passe par le second axe et qui est formé par les premier, second et troisième axes dans un plan perpendiculaire à ces derniers est au moins égal à 60°.

La surface du galet de renvoi présente avantageusement, pour la bande, un coefficient de frottement élevé, tel que celui que présente par exemple une surface métallique dépolie.

L'invention est particulièrement adaptée à être utilisée pour l'entraînement de bandes magnétiques sur lesquelles des informations sont enregistrées et/ou lues en va-et-vient ou marche-arrêt.

Le galet presseur peut être porté par la cassette elle-même ou intégré dans l'appareil d'enregistrement ou de reproduction avec lequel la cassette est destinée à être utilisée.

D'autres caractéristiques et avantages de l'invention ressortiront de la description qui en est faite ci-après, à titre indicatif et nullement limitatif, en référence au dessin annexé, dans lequel:

- la figure 1 est un schéma en perspective d'un dispositif d'entraînement de bande connu à galet presseur et galet moteur.

- la figure 2 est un schéma en perspective du dispositif d'entraînement de bande conforme à l'invention;

- la figure 3 est un schéma du même dispositif appliqué à une cassette, le galet presseur étant intégré à la cassette;

- la figure 4 est un schéma du même dispositif appliqué à une cassette, le galet presseur étant intégré à l'appareil d'enregistrement et/ou de lecture d'informations avec lequel la cassette est destinée à être utilisée.

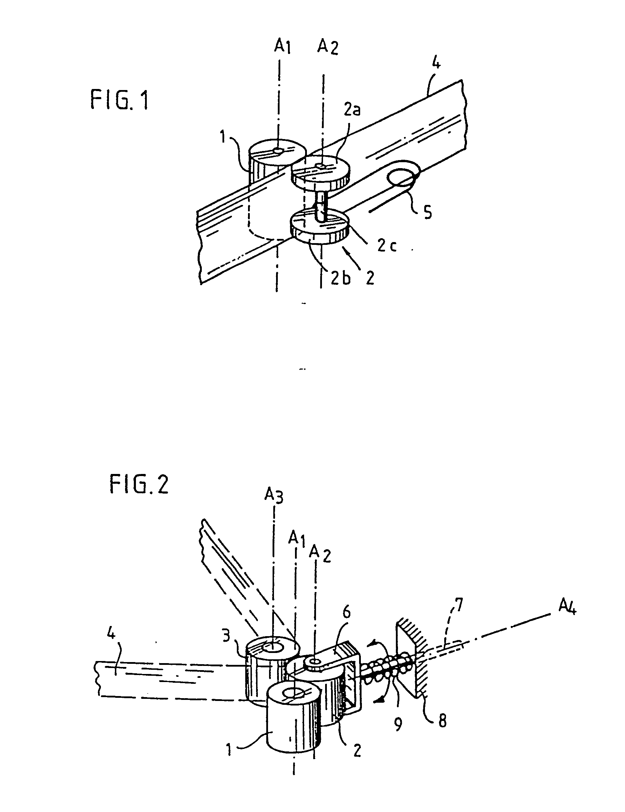

Le principe utilisé dans l'art antérieur est représenté sur la figure 1.

Le dispositif d'entraînement de bande connu comprend un galet moteur 1 monté à rotation autour d'un premier axe A1 et un galet presseur 2 monté à rotation autour d'un second axe A2, sensiblement parallèle au premier axe A1.

La bande magnétique 4 est pincée entre les galets moteur 1 et presseur 2 sans pratiquement entourer ni l'un ni l'autre de ces deux galets.

Le galet presseur 2 est par exemple constitué de deux disques 2a, 2b reliés par un arbre 2c sur lequel porte élastiquement un ressort en épingle 5.

La pression exercée par le ressort 5 est transmise par l'intermédiaire du galet presseur 2 à la bande 4 qui se trouve ainsi appliquée sur le galet moteur 1. Dans ces conditions, la rotation du galet moteur 1 assure la rotation simultanée du galet presseur 2 et l'entraînement longitudinal de la bande.

Ce dispositif d'entraînement connu présente l'inconvénient déjà évoqué que la bande 4 dérive en hauteur sur le galet 2 lorsqu'elle est exploitée en va-et-vient, surtout à basse température.

Le dispositif de l'invention, qui résoud ce problème, est représenté sur la figure 2 sur laquelle les éléments comparables aux éléments illustrés sur la figure 1 sont repérés par les mêmes références.

Comme le dispositif connu, le dispositif de l'invention comprend un galet moteur 1 monté à rotation autour d'un axes A1 et un galet presseur 2 monté à rotation autour d'un axe A2 sensiblement parallèle à l'axe A1.

Cependant, à la différence de la disposition connue, la bande 4 n'est pas pincée entre les galets moteur 1 et presseur 2, mais entoure partiellement un galet de renvoi 3 monté à rotation autour d'un axe A3, sensiblement parallèle aux deux autres axes A1 et A2. L'angle d'enroulement de la bande 4 autour du galet de renvoi 3 est aussi grand que possible et par exemple égal ou supérieur à 90°.

Le galet presseur 2 est élastiquement sollicité à la fois contre le galet moteur 1 et contre le galet de renvoi 3, les galets moteur et de renvoi étant quant à eux distants l'un de l'autre.

De cette façon, la bande 4 se trouve interposée et pincée entre le galet presseur 2 et le galet de renvoi 3 et l'énergie du mouvement, donnée par le galet moteur 1, est transmise par le galet presseur 2 au galet de renvoi 3 et à la bande 4. Pour la bande 4, le galet presseur devient donc moteur, contrairement au cas du dispositif antérieur.

Selon une caractéristique de l'invention, le galet presseur 2 est monté à rotation non seulement autour de l'axe A2, mais aussi autour d'un axe A4 sensiblement perpendiculaire à l'axe A2 et au plan passant par les axes A1 et A3 des galets moteur et de renvoi.

En outre, l'axe A4 représente de préférence la direction suivant laquelle le galet presseur 2 est sollicité vers les galets 1 et 3.

En toute rigueur, le galet presseur 2 doit être sollicité suivant une direction qui lui permette de devenir tangent en même temps au galet moteur et au galet de renvoi; néanmoins cette direction est approximativement donnée par la médiatrice du segment délimité par les traces des axes A1 et A2 dans un plan perpendiculaire à ces derniers, lorsque les galets moteur 1 et de renvoi 3 ont sensiblement le même rayon.

Par exemple, le galet presseur 2 est monté à rotation dans un étrier 6 terminé par un arbre perpendiculaire 7 tourillonnant dans un support 8, et un ressort à boudin 9 repousse l'étrier 6 du support 8 en direction des galets 1 et 3.

Pour que le galet presseur puisse s'appuyer correctement sur les galets moteur 1 et de renvoi 3, l'angle de sommet A2 formé par les axes A1, A2 et A3 dans un plan perpendiculaire à ces derniers est de préférence au moins égal à 60° et l'arbre 7 coulisse dans le support 8 avec un certain jeu, de manière à autoriser l'axe A2, si besoin en est, à se rapprocher de l'axe A3 tout en s'éloignant de l'axe A1 ou, inversement, à se rapprocher de l'axe A1 tout en s'éloignant de l'axe A3.

En d'autres termes, le galet presseur 2 possède une possibilité de débattement dans une direction parallèle au plan joignant les axes A1 et A3.

Bien qu'il soit difficile de donner la valeur minimale de ce débattement, on peut dire qu'il doit être au moins égal au jeu qu'il est nécessaire de rattraper du fait des imperfections des galets et de leur dilatations ou contractions en fonction de la température.

De préférence, le galet presseur 2 est formé d'un cylindre entier plutôt que de deux disques et est constitué par un galet métallique recouvert d'une couche de caoutchouc de 2 à 3 dixièmes de millimètre d'épaisseur.

Le galet de renvoi 3 présente pour la bande un coefficient de frottement élevé et est par exemple constitué, au moins sur sa surface externe, d'un métal ou alliage métallique dépoli, d'acier par exemple.

Le galet moteur 1 peut lui-même être constitué par un galet métallique recouvert d'une fine couche de caoutchouc, comme le galet presseur.

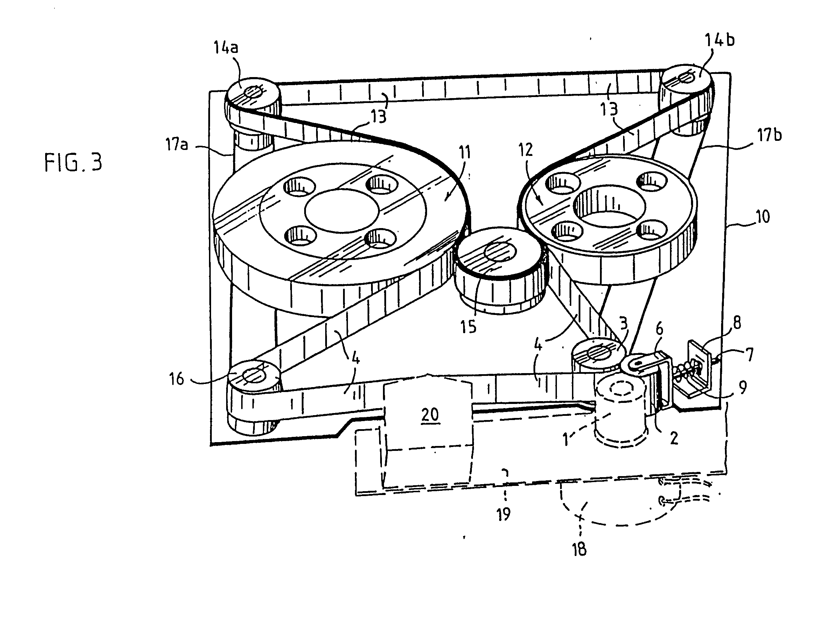

La figure 3 représente une cassette dans laquelle est intégré le dispositif de l'invention.

Mis à part le dispositif de l'invention, cette cassette est déjà connue de l'homme de l'art, notamment par le brevet européen EP 0 089 865 A1, de sorte qu'une description détaillée de cette cassette n'est pas nécessaire.

La cassette comprend une platine 10 sur laquelle sont montées deux bobines 11, 12 qui, respectivement, dévident et enroulent la bande magnétique 4.

Ces bobines sont synchronisées au moyen d'une courroie élastique 13 passant sur des galets de renvoi 14a, 14b et sur un galet flottant 15 qui applique cette courroie contre les bobines.

La bande magnétique passe sur deux galets de renvoi 16, 3 dont l'un, 3, est le galet de renvoi qui fait partie du système d'entraînement de l'invention.

Les galets de renvoi 14a et 16 d'une part et 14b et 3 d'autre part peuvent être synchronisés au moyen de courroies toriques 17a, 17b, conformément à l'enseignement du brevet européen mentionné ci-dessus.

Le galet presseur 2 est, avec son étrier 6, l'arbre 7 et le ressort 9, monté sur un support 8 solidaire de la platine 10 tandis que le galet moteur 1, solidaire d'un moteur d'entraînement 18 est monté sur la platine 19 d'un appareil d'enregistrement et/ou de lecture d'informations avec lequel la cassette de l'invention est destinée à être utilisée. Cet appareil comporte au moins une tête 20 d'enregistrement et/ou de lecture d'informations par exemple solidaire de la platine 19 comme le montre la figure 3.

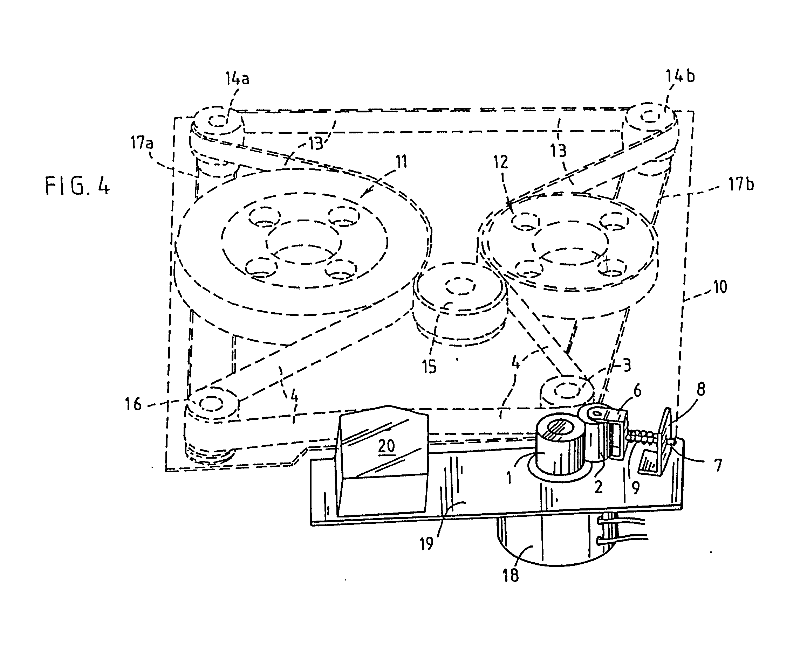

La figure 4 représente exactement les mêmes éléments que la figure 3, repérés par les mêmes références.

La seule différence entre les figures 3 et 4 est que cette dernière correspond au cas où le galet presseur 2 n'est pas intégré à la cassette, mais à l'appareil utilisant celle-ci.

C'est ainsi qu'on peut voir, sur la figure 4, que le support 8 n'est plus solidaire de la platine 10 de la cassette, mais de la platine 19 de l'appareil, qui supporte également le moteur 18, le galet moteur 1 et la tête 20.

Par rapport à la figure 3, la disposition des galets moteur 1 et de renvoi 3 est également modifiée sur la figure 4 de façon que le galet presseur 2 soit élastiquement sollicité contre les galets moteur 1 et de renvoi 3 suivant une direction telle qu'il exerce sensiblement la même pression sur chacun de ces deux galets 1 et 3.

Grâce à la disposition décrite, la dérive en hauteur de la bande peut être maintenue à une valeur très faible, qui peut être évaluée à trois ou quatre centièmes de millimètre à − 40°C.

Bien que l'invention ait été décrite en référence aux figures 3 et 4, pour un type de cassette très particulier, il est bien entendu que l'invention est notamment utilisable dans tous les cas où le système d'entraînement de la figure 1 ou des systèmes analogues étaient antérieurement utilisés.

## Revendications

1. Dispositif d'entraînement d'une bande magnétique (4) pincée entre deux galets dont la rotation simultanée provoque l'entraînement de cette bande, ce dispositif comprenant un galet moteur (1) monté à rotation autour d'un premier axe et fournissant l'énergie nécessaire à l'entraînement de la bande, et un galet presseur (2), monté à rotation autour d'un second axe sensiblement parallèle au premier et assurant le pincement de la bande, caractérisé en ce qu'il comprend en outre un galet de renvoi (3) autour duquel passe la bande, distant du galet moteur et monté à rotation autour d'un troisième axe (A3) sensiblement parallèle aux deux premiers, et en ce que le galet presseur (2) est élastiquement sollicité à la fois contre la bande (4) passant sur le galet de renvoi (3) et contre le galet moteur (1), et est monté à rotation autour d'un quatrième axe (A4) sensiblement perpendiculaire au second axe (A2) et sensiblement parallèle à la direction suivant laquelle ce galet presseur (2) est sollicité.

2. Dispositif suivant la revendication 1, caractérisé en ce que le quatrième axe (A4) est sensiblement perpendiculaire au plan passant par les premier (A1) et troisième (A3) axes.

3. Dispositif suivant la revendication 1 ou 2, caractérisé en ce que la bande (4) entoure le galet de renvoi (3) sur un angle d'enroulement au moins égal à 90°.

4. Dispositif suivant l'une quelconque des revendications précédentes, caractérisé en ce que le galet presseur (2) possède une possibilité de débattement suivant une direction parallèle au plan (8) joignant les premier (A1) et troisième (A3) axes.

5. Dispositif suivant l'une quelconque des revendications précédentes, caractérisé en ce que l'angle dont le sommet passe par le second axe (A2) et qui est formé par les premier (A1), second (A2) et troisième (A3) axes dans un plan perpendiculaire à ces derniers est au moins égal à 60°.

6. Dispositif suivant l'une quelconque des revendications précédentes, caractérisé en ce que la surface du galet de renvoi (3) présente pour la bande (4) un coefficient de frottement élevé.

7. Dispositif suivant la revendication 6 caractérisé en ce que la surface du galet de renvoi (3) est métallique et dépolie.

8. Application du dispositif suivant l'une quelconque des revendications précédentes à l'entraînement d'une bande d'une cassette (10), dans laquelle le galet presseur (2) est porté par la cassette.

9. Application du dispositif suivant l'une quelconque des revendications 1 à 7 à l'entraînement d'une bande (4) d'une cassette (10) destinée à être utilisée avec un appareil d'enregistrement et/ou de reproduction, dans laquelle le galet presseur (2) est porté par cet appareil.

10. Application du dispositif suivant l'une quelconque des revendications 1 à 7 à l'entraînement d'une bande (4) d'une cassette (10) sur laquelle des informations sont enregistrées ou lues en va-et-vient.

## Patentansprüche

1. Vorrichtung zum Antrieb eines Magnetbandes (4), das zwischen zwei Rollen gepreßt ist, deren gleichzeitige Umdrehung den Antrieb dieses Bandes hervorruft, wobei diese Vorrichtung eine Antriebsrolle (1) enthält, die um eine erste Achse herum drehgelagert ist und die für den Bandantrieb notwendige Energie liefert, und eine drehbeweglich um eine zweite Achse gelagerte Andrückrolle (2), die etwa parallel zu ersten liegt und die Bandanpressung sicherstellt, dadurch gekennzeichnet, daß sie außerdem eine Umlenkrolle (3) enthält, um die herum das Band läuft, und die von der Antriebsrolle entfernt und um eine dritte Achse (A3) herum drehgelagert ist, die etwa parallel zu den beiden ersten liegt, und darin, daß die Andrückrolle (2) sowohl gegen das auf der Umlenkrolle (3) laufende Band (4), als auch gegen die Antriebsrolle (1) elastisch beansprücht ist, und um eine vierte Achse (A4) herum drehgelaggert ist, die etwa senkrecht zur zweiten Achse (A2) verläuft und etwa parallel zu der Richtung liegt, in der diese Andrückrolle (2) beansprucht wird.

2. Vorrichtung nach Anspruch 1, dadurch gekennzeichnet, daß die vierte Achse (A4) etwa senkrecht zu der durch die erste (A1) und dritte (A3) Achse verlaufenden Ebene liegt.

3. Vorrichtung nach Anspruch 1 oder 2, dadurch gekennzeichnet, daß das Band (4) die Umlenkrolle (3) über einen Umschlingungswinkel von mindestens gleich 90° umgibt.

4. Vorrichtung nach einem der vorausgehenden Ansprüche, dadurch gekennzeichnet, daß die Andrückrolle (2) eine Federungsspielmöglichkeit in einer Richtung hat, die parallel zu der die erste (A1) und dritte (A3) Achse verbindenden Ebene (8) liegt.

5. Vorrichtung nach einem der vorausgehenden Ansprüche, dadurch gekennzeichnet, daß der Winkel, dessen Spitze durch die zweite Achse (A2) verläuft und der aus der ersten (A1), zweiten (A2) und dritten (A3) Achse in einer zu diesen letzteren senkrechten Ebene gebildet ist, mindestens gleich 60° ist.

6. Vorrichtung nach einem der vorausgehenden Ansprüche, dadurch gekennzeichnet, daß die Oberfläche der Umlenkrolle (3) für das Band (4) einen hohen Reibungskoeffizienten aufweist.

7. Vorrichtung nach Anspruch 6, dadurch gekennzeichnet, daß die Oberfläche der Umlenkrolle (3) metallisch und matt ist.

8. Anwendung der Vorrichtung nach einem der vorausgehenden Ansprüche auf den Bandantrieb einer Kassette (10), in der die Andrückrolle (2) von der Kassette getragen wird.

9. Anwendung der Vorrichtung nach einem der Ansprüche 1 bis 7 auf den Antrieb eines Bandes (4) einer Kassette (10), die dazu bestimmt ist, mit einem Aufnahme- und/oder Wiedergabegerät verwendet zu werden, und in der die Andrückrolle (2) von diesem Gerät getragen wird.

10. Anwendung der Vorrichtung nach einem der Ansprüche 1 bis 7 auf den Antrieb eines Bandes (4) einer Kassette (10), auf der Informationen abwechselnd ein- oder ausgelesen werden.

**Claims**

1. A device for driving a magnetic tape (4) pinched between two wheels, such that simultaneous rotation of the wheels causes the tape to be driven, the device comprising a drive wheel (1) mounted to rotate about a first axis and providing the energy required for driving the tape, and a presser wheel (2) mounted to rotate about a second axis substantially parallel to the first and serving to pinch the tape, the device being characterized in that it further includes a return wheel (3) over which the tape passes, the return wheel being distant from the drive wheel and being mounted to rotate about a third axis (A3) substantially parallel to the first two axes, and in that the presser wheel (2) is resiliently urged both against the tape (4) passing over the return wheel (3) and against the drive wheel (1), and is mounted to swivel about a fourth axis (A4) substantially perpendicular to the second axis (A2) and substantially parallel to the direction along which the presser wheel (2) is urged.

2. A device according to claim 1, characterized in that the fourth axis (A4) is substantially perpendicular to the plane including the first and third axes (A1, A3).

3. A device according to claim 1 or 2, characterized in that the tape (4) winds round the return wheel (3) through a winding angle of not less than 90°.

4. A device according to any preceding claim, characterized in that the presser wheel (2) is provided with freedom to move in a direction parallel to the plane (8) including the first and third axes (A1, A3).

5. A device according to any preceding claim, characterized in that the angle formed between the first, second, and third axes (A1, A2, A3) in a plane perpendicular thereto and having its vertex at the second axis (A2) is not less than 60°.

6. A device according to any preceding claim, characterized in that the surface of the return wheel (3) has a high coefficient of friction with the tape (4).

7. A device according to claim 6, characterized in that the surface of the return wheel (3) is metal and dull.

8. An application of the device according to any preceding claim to driving a tape in a cassette (10) wherein the presser wheel (2) is carried by the cassette.

9. An application of the device according to any one of claims 1 to 7 to driving a tape (4) of a cassette (10) intended to be used with a recording and/or playback apparatus, wherein the presser wheel (2) is carried by the apparatus.

10. An application of the device according to any one of claims 1 to 7, to driving a tape (4) of a cassette (10) on which information is recorded or read with back-and-forth motion.

FIG.1

A1    A2

1

2a

4

5

2c

2b   2

FIG.2

A3

A1
A2

4

3

6

7

A4

1

2

9

8

FIG.3

EP 0 156 723 B1

FIG. 4

EP 0 156 723 B1